# EUROPEAN PATENT SPECIFICATION

(11) **EP 1 517 091 B1**
(45) Date of publication and mention of the grant of the patent: **28.09.2011**
(21) Application number: 04251839.9
(22) Date of filing: 29.03.2004
(51) Int. Cl.: F24C 7/08

(54) **Electric cooking apparatus and method of controlling the same**
Elektroherd und Methode zu dessen Regelung
Cuisinière électrique et méthode de régulation

(30) Priority: 09.09.2003 KR 2003063004
(43) Date of publication of application: 23.03.2005
(73) Proprietor: Samsung Electronics Co., Ltd., Gyeonggi-do (KR)
(72) Inventor: Yang, Ha Yeong, Suwon-City, Kyunggi-Do (KR); Kim, Jong Gun, Taean-Eub, Hwasung-City, Kyungki-Do (KR)
(74) Representative: Robinson, Ian Michael

(56) References cited:
- EP-A- 1 206 164
- EP-A- 1 213 543
- EP-A- 1 303 168
- DE-A1- 10 033 361

## Description

The present invention relates, in general, to an electric cooking apparatus, and more particularly, to an electric cooking apparatus and method of controlling the same which heats a cooking container put on a cooking plate using heating units located under the cooking plate, and cooks food.

Generally, an electric cooking apparatus is an apparatus which converts electric energy into thermal energy, and heats and cooks food using the thermal energy.

Generally, the electric cooking apparatus includes a body casing. A heating device is placed in the body casing to provide heat. Additionally, a cooking plate is mounted on an upper part of the body casing to allow a cooking container to be put thereon. A mark is indicated at a location of the cooking plate corresponding to the heating device so that a user puts the cooking container thereon.

However, a conventional electric cooking apparatus is inconvenient in that the user must put the cooking container at a pre-designated location on the cooking plate corresponding to the heating device because the location of the conventional heating device is fixed.

Furthermore, the conventional electric cooking apparatus is problematic in that unnecessary energy loss is incurred if the cooking container is not precisely located at the pre-designated location on the cooking plate corresponding to the heating units.

DE-A-10033361 mentions a cooking device with an array of heating units which are controlled using a separate array of capacitance sensors to locate a cooking vessel and a separate array of thermal sensors to control temperature.

EP-A-1,303,168 mentions a cooking hob with discrete distributed heating elements which are arranged in an array and are controlled by static switches according to a user's input to heat a selected area of the array.

According to the present invention there is provided an apparatus and method as set forth in the appended claims. Preferred features of the invention will be apparent from the dependent claims, and the description which follows.

The present invention provides an electric cooking apparatus and method of controlling the electric cooking apparatus, which allow a heating position to be automatically changed according to a location and size of a cooking container located on a cooking plate.

Additional aspects and/or advantages of the invention will be set forth in part in the description which follows and, in part, will be obvious from the description, of may be learned by practice of the invention.

In one aspect of the present invention there is provided an electric cooking apparatus, comprising heating units each heating unit having a heating element and electrodes connected to the heating element, a switching unit to switch power applied to the electrodes, a current detecting unit to detect values of current output from the heating units, and a control unit to operate a predetermined number of the heating units, which are determined according to the values of current detected from the current detecting unit after operating the heating units.

It is another aspect of the present invention to provide a method of controlling an electric cooking apparatus, an electric cooking apparatus having heating units each heating unit having a heating element and electrodes connected to the heating element, and a switching unit to switch power to be applied to the electrodes, the method comprising detecting values of current output from the heating units after operating the heating units, and operating a predetermined number of heating units determined according to the detected values of current.

For a better understanding of the invention, and to show how embodiments of the same may be carried into effect, reference will now be made, by way of example, to the accompanying diagrammatic drawings in which:
Figure 1 is a perspective view of an electric cooking apparatus, according to the present invention;
Figure 2 is an exploded perspective view showing main components of the electric cooking apparatus of Figure 1;
Figure 3 is a front view showing assembled main components of the electric cooking apparatus of Figure 1;
Figure 4 is a control block diagram of the electric cooking apparatus, according to the present invention;
Figure 5 is a control flowchart showing a method of controlling the electric cooking apparatus, according to the present invention; and
Figure 6 is a view showing that a heating location is changed when the cooking container is moved to another location.

Reference will now be made in detail to the embodiments of the present invention, examples of which are illustrated in the accompanying drawings, wherein like reference numerals refer to like elements throughout. The embodiments are described below to explain the present invention by referring to the figures.

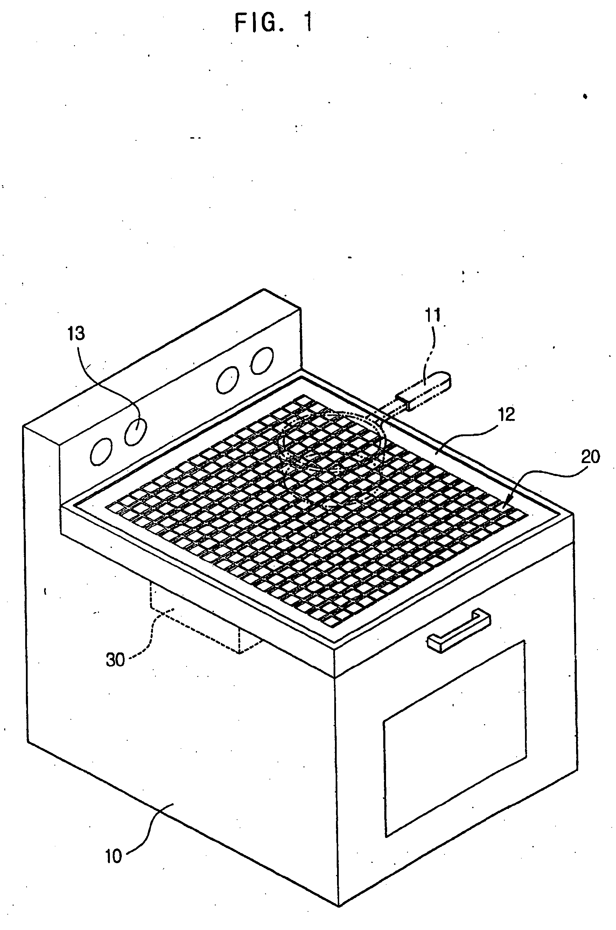

Figure 1 is a perspective view of an electric cooking apparatus, according to the present invention. In Figure 1, the electric cooking apparatus of the present invention comprises a body casing 10. A cooking plate 12, on which a cooking container 11 is located, is mounted on an upper part of the body casing 10. Heating units 20 are located in the body casing 10 under the cooking plate 12 and provide heat to the cooking plate 12. The heating units 20 are operated by a control device 30. Furthermore, a plurality of control buttons 13 are provided on one side of the body casing 10 to input commands to the control device 30 to operate the heating units 20.

The user causes the electric cooking apparatus to perform cooking by operating the heating units 20 using relevant control buttons 13 after putting the cooking container 11 on the cooking plate 12.

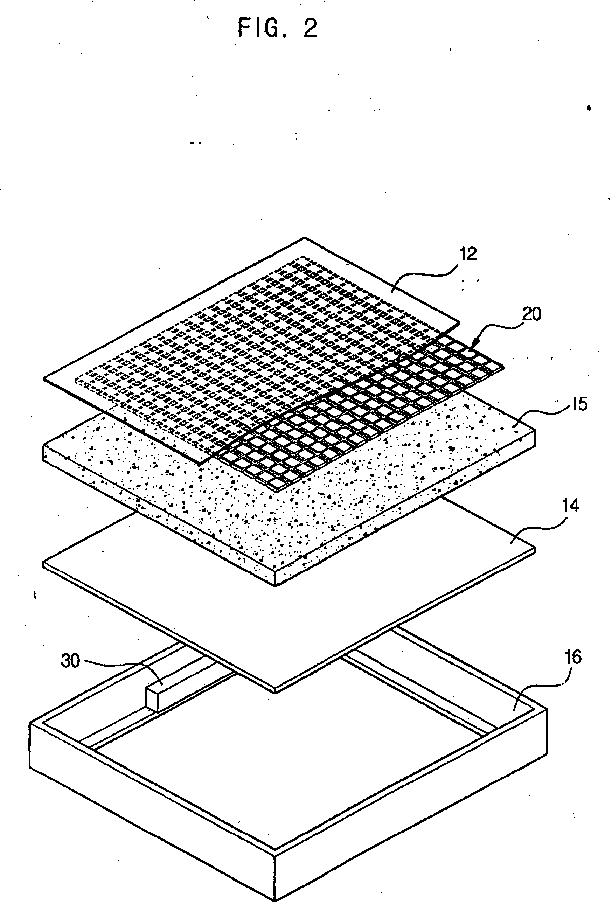

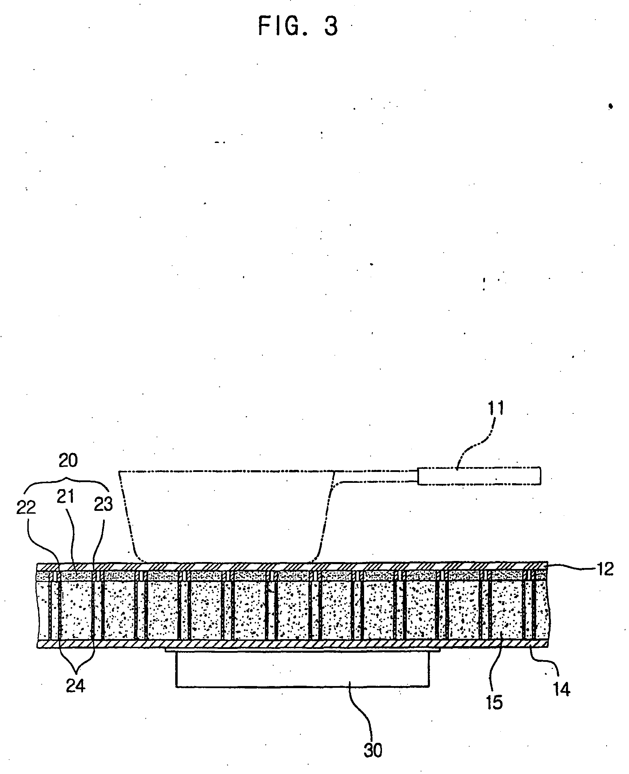

Figure 2 is an exploded perspective view showing main components of the electric cooking apparatus of Figure 1. Figure 3 is a front view of the assembled main components of the electric cooking apparatus of Figure 1. In Figures 2 and 3, an electric cooking apparatus comprises a thermally conductive cooking plate 12 to allow the cooking container 11 to be located thereon. The thermally conductive cooking plate 12 is made of a ceramic glass.

The heating units 20 which provide heat to a lower part of the cooking plate 12 are located under the cooking plate 12 at predetermined intervals. A heat-insulating material 15 is located under the heating units 20, and a support plate 14 is located under the heat-insulating material 15. Furthermore, a support frame 16 is located around the support plate 14 to support the control device 30 which operates the heating units 20.

Each of the heating units 20 comprises a sheet-heating element 21 formed by printing a heat-generating paint under the thermally conductive cooking plate 12 in rectangular cells, and a pair of electrodes 22 and 23 connected to both ends of the sheet-heating element 21, respectively, to supply power thereto.

Each of the electrodes 22 and 23 of the heating units 20 is electrically connected to the control device 30 through an electrical connecting member 24.

Accordingly, the control device 30 may operate the heating units 20 separately or in groups by supplying or cutting off power to the electrodes 22 and 23, so that not only an entire region but also a localized region of the cooking plate 12 may be used as a cooking region.

Furthermore, each of the heating units 20 operate as a heating element and a location-detecting sensor which allows the control unit 40 to detect a location and size of the cooking container 11, details of which will be described later.

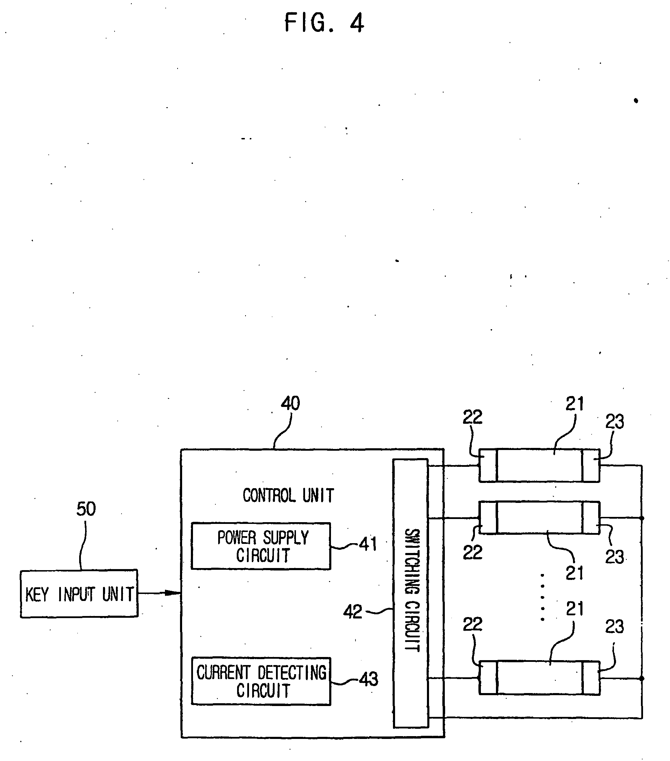

Figure 4 is a control block diagram, according to the present invention. In Figure 4, the electric cooking apparatus of the present invention comprising a control unit 40 to perform overall control.

A key input unit 50 having the plurality of control buttons 13 to receive cooking commands from the user is electrically connected to an input side of the control unit 40.

Furthermore, the heating units 20 connected in parallel to each other are electrically connected to an output side of the control unit 40. An (-) electrode 23 of each of the heating units 20 is connected to the control unit 40 as a common electrode, and an (+) electrode 22 thereof is connected to the control unit 40.

Furthermore, the control unit 40 comprises a power supply circuit 41 to supply a certain amount of power thereto, a switching circuit 42 to switch the power supplied from the power supply circuit 41 to respective electrodes, and a current detecting circuit 43 to detect changes in current in the heating units 20 supplied with the power.

Generally, a rate of change of resistance of the sheet-heating element 21 changes depending on whether the cooking container 11 exists at a location of the cooking plate 12 corresponding to the sheet-heating element 21 inside the heating unit 20. Accordingly, depending on whether the cooking container exists, a value of current in the heating unit 20 is changed by the sheet-heating element 21. Therefore, the control unit 40 supplies the power to each of the heating units 20 through the switching circuit 42 subsequently, detects the change of current in each of the heating units 20 through the current detecting circuit 43, and analyzes the rate of change of current, so that whether the cooking container 11 exists at the location of the cooking plate 12 corresponding to each of the heating units 20 may be recognized and the location and size of the cooking container 11 may be detected.

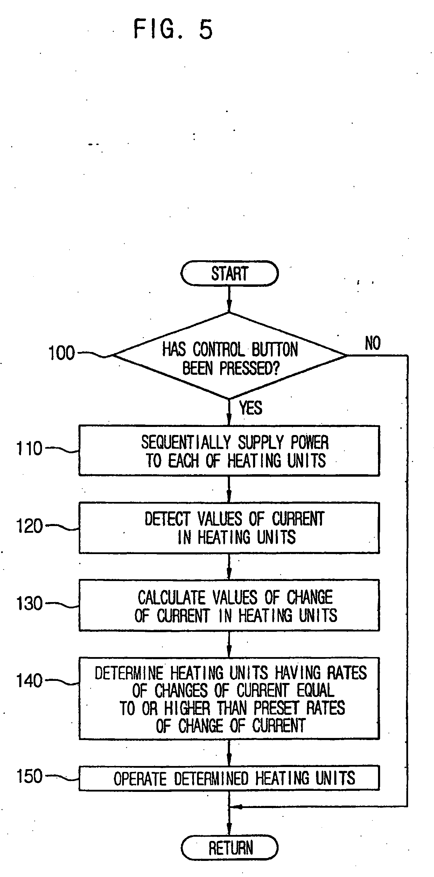

Figure 5 is a control flowchart showing a method of controlling the electric cooking apparatus, according to the present invention. In Figure 5, the user puts food into the cooking container 11 and places the cooking container 11 on the cooking plate 12.

The control unit 40 determines whether the control button 13, which operates the electric cooking apparatus, has been pressed by the user in operation 100.

When it is determined that the control button has been pressed, the control unit 40 determines the heating units 20 corresponding to a location and size of the cooking container 11, and operates the determined heating units 20.

To determine the heating units 20 corresponding to the location and size of the cooking container 11, the control unit 40 sequentially supplies power through the switching circuit 42 to sequentially operate the heating units 20 in operation 110. After sequentially supplying the power to the heating units 20, the control unit 40 detects values of current in the heating units 20 through the current detecting circuit 43 for a certain period of time in operation 120. As described above, when the power is applied to the electrodes 22 and 23 of the heating units 20, the sheet-heating elements 21 generate heat. Since rates of change of resistance of the sheet-heating elements 21 are different depending on whether the cooking container 11 exists or not at the location of the cooking plate 12, the rates of change of current detected by the current detecting circuit 43 vary with time. In operation 130, the control unit 40 calculates the rates of change of current based on the values of current detected in the operation 120. Additionally, in operation 140, the control unit 40 determines the heating units 20 having rates of change of current equal to or higher than a preset rate of change of current. Accordingly, when the rate of change of current of each of the heating units 20 is equal to or higher than the preset rate of change of current, the cooking container 11 is located on the location of the cooking plate 12 corresponding to the heating units 20. As a result, when the heating units 20 having the rates of change of current are operated, only a portion of the cooking plate 12 on which the cooking container 11 is located, is heated.

Thereafter, in operation 150 the control unit 40 operates the heating units 20 determined in operation 140. Consequently, the control unit 40 operates the heating units 20 which correspond to the location and size of the cooking container 11, so that unnecessary energy loss may be reduced.

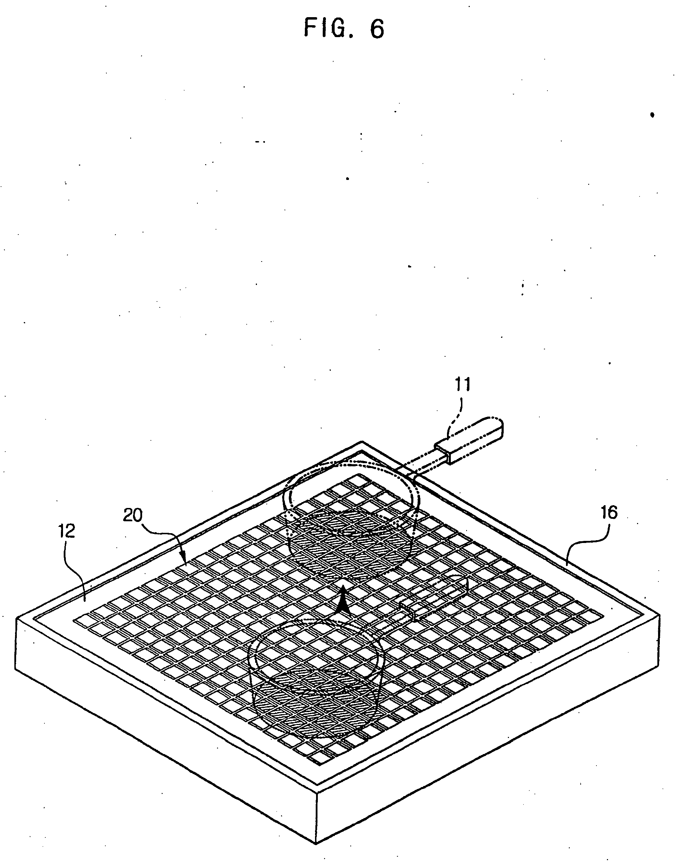

The control unit 40 periodically determines whether the cooking container exists on the cooking plate 12 in a same manner as described above while operating the heating units 20. If the cooking container 11 is moved to another location, as shown in Figure 6, the control unit 40 detects the new location and then operates the heating units 20 corresponding to the detected new location. Furthermore, if another cooking container is placed on the cooking plate 12, the control unit 40 periodically determines whether the cooking container 11 exists on the cooking plate 12 by checking remaining heating units except for heating units 20 currently being operated, and automatically and additionally operates the heating units 20.

As described above in detail, the electric cooking apparatus may heat the cooking container without regard to the location of the cooking container on the cooking plate, so that convenience for the user is improved.

Furthermore, the electric cooking apparatus heats only the portion of the cooking plate in contact with the cooking container without regard to the size of the cooking container, so that the present invention reduces unnecessary energy loss.

Although a few preferred embodiments have been shown and described, it will be appreciated by those skilled in the art that various changes and modifications might be made without departing from the scope of the invention, as defined in the appended claims.

## Claims

1. An electric cooking apparatus, comprising:
heating units (20), each heating unit (20) having a heating element (21) and electrodes (22,23) connected to the heating element (21);
a switching unit (42) to switch power applied to the electrodes (22,23);
**characterised in that** it further comprises
a current detecting unit (43) to detect values of current output from the heating units (20); and
a control unit (30) to operate a predetermined number of the heating units (20), which are determined according to the values of current detected from the current detecting unit (43) after operating the heating units (20).

2. The electric cooking apparatus of claim 1, further comprising a thermally conductive cooking plate (12) wherein the heating units (20) are printed in independent cells under the thermally conductive cooking plate (12) which allows a cooking container (11) to be located thereon.

3. The electric cooking apparatus of claim 2, further comprises a heat-insulating material (15) located under the heating units (20).

4. The electric cooking apparatus of claim 2 or 3, wherein the heating units (20) are printed under a total area of the cooking plate (12).

5. The electric cooking apparatus of any preceding claim, wherein:
the control unit (30) calculates rates of change of current in the heating units (20) according to the values of current detected from the current detecting unit (43).

6. The electric cooking apparatus of claim 5, further comprising a microprocessor to operate the predetermined number of heating units (20) determined according to the calculated rates of change of current.

7. The electric cooking apparatus of claim 6, wherein the microprocessor determines the heating units (20) having output rates of change of current equal to or higher than a preset rate of change of current to determine whether a cooking container (11) is located on the electric cooking apparatus, and operates the predetermined number of heating units (20).

8. The electric cooking apparatus of claim 2 or any claim dependent thereon, wherein the heating units (20) provide heat to a lower part of the cooking plate (12) and are located under the cooking plate (12) at predetermined intervals.

9. The electric cooking apparatus of claim 3 or any claim dependent thereon, further comprising a support plate (14) located under the heat-insulating material (15), wherein a support frame (16) is located around the support plate (14) to support the control unit (30) which operates the heating units (20).

10. The electric cooking apparatus of claim 2 or any claim dependent thereon, wherein each of the heating units (20) comprising a sheet-heating element (21) formed by printing a heat-generated paint under the cooking plate (12) in the independent cells.

11. The electronic cooking apparatus of any preceding claim, wherein the electrodes (22,23) are connected to an end of the sheet-heating element (21), respectively to supply power thereto.

12. The electric cooking apparatus of any preceding claim, further comprising an electrical connection member (24), wherein each of the heating units (20) is electrically connected to the control unit (30) through the electrical connection member (24).

13. The electric cooking apparatus of any preceding claim, further comprising a key input unit having a plurality of control buttons (13) is electrically connected to an input side of the control unit (30) to receive cooking commands from a user.

14. The electric cooking apparatus of any preceding claim, wherein the control unit (30) operates the heating units (20) separately.

15. The electric cooking apparatus of any preceding claim, wherein the control unit (30) operates the heating units (20) in groups by supplying and cutting off power to the electrodes (22,23).

16. The electric cooking apparatus of any preceding claim, wherein the control unit (30) detects a location and a size of a cooking container (11) by calculating the rate of change of current with respect to each of the heating units (20).

17. The electric cooking apparatus of any preceding claim, wherein the heating units (20) are connected in parallel to each other and are electrically connected to an output side of the control unit (30).

18. The electric cooking apparatus of claim 2 or any claim dependent thereon, wherein the thermally conductive cooking plate (12) is made of a ceramic glass material.

19. The electric cooking apparatus of claim 2 or any claim dependent thereon, wherein when the cooking container (11) is moved to another location, the control unit (30) detects the location and operates the predetermined number of heating units (20) corresponding to the detected location.

20. A method of controlling an electric cooking apparatus, the electric cooking apparatus having heating units (20), each heating unit (20) having a heating element (21) and electrodes (22,23) connected to the heating element (21), and a switching unit (42) to switch power to be applied to the electrodes (22,23), the method **characterised by**:
detecting values of current output from the heating units (20) after operating the heating units (20); and
operating the predetermined number of heating units (20) determined according to the detected values of current.

21. The method of claim 20, further comprising:
calculating rates of change of current of the heating units (20) according to the detected values of current; and
detecting whether a cooking container (11) to be heated by the heating units (20) is located in the electric cooking apparatus according to the calculated rates of change of current.

22. The method of claim 21, wherein:
determining the heating units (20) having output rates of change of current equal to or higher than a preset rate of change of current; and
operating the predetermined number of heating units (20).

## Patentansprüche

1. Elektrische Kochvorrichtung, die Folgendes umfasst:
Heizeinheiten (20), wobei jede Heizeinheit (20) ein Heizelement (21) und Elektroden (22, 23), die mit dem Heizelement (21) verbunden sind, besitzt,
eine Schalteinheit (42), um Leistung, die in die Elektroden (22,23) eingegeben wird, zu schalten;
**dadurch gekennzeichnet, dass** sie ferner Folgendes umfasst:
eine Stromdetektionseinheit (43), um Werte des von den Heizeinheiten (20) ausgegebenen Stroms zu detektieren;
eine Steuereinheit (30), um eine vorgegebene Anzahl der Heizeinheiten (20) zu betreiben, die in Übereinstimmung mit den durch die Stromdetektionseinheit (43) detektierten Stromwerten bestimmt werden, nachdem die Heizeinheiten (20) betrieben worden sind.

2. Elektrische Kochvorrichtung nach Anspruch 1, die ferner eine wärmeleitende Kochplatte (12) umfasst, wobei die Heizeinheiten (20) in unabhängigen Zellen unter der wärmeleitenden Kochplatte (12) gedruckt sind, was ermöglicht, dass darauf ein Kochbehälter (11) lokalisiert werden kann.

3. Elektrische Kochvorrichtung nach Anspruch 2, die ferner ein wärmeisolierendes Material (15) umfasst, das sich unter den Heizeinheiten (20) befindet.

4. Elektrische Kochvorrichtung nach Anspruch 2 oder 3, wobei die Heizeinheiten (20) unter einem gesamten Bereich der Kochplatte (12) gedruckt sind.

5. Elektrische Kochvorrichtung nach einem beliebigen vorhergehenden Anspruch, wobei:
die Steuereinheit (30) Änderungsraten des Stroms in den Heizeinheiten (20) in Übereinstimmung mit den durch die Stromdetektionseinheit (43) detektierten Stromwerten berechnet.

6. Elektrische Kochvorrichtung nach Anspruch 5, die ferner einen Mikroprozessor umfasst, um die vorgegebene Anzahl von Heizeinheiten (20), die in Übereinstimmung mit den berechneten Stromänderungsraten bestimmt werden, zu betreiben.

7. Elektrische Kochvorrichtung nach Anspruch 6, wobei der Mikroprozessor die Heizeinheiten (20) bestimmt, deren Stromausgangs-Änderungsraten gleich oder höher als eine im Voraus festgelegte Stromänderungsrate sind, um zu bestimmen, ob sich auf der elektrischen Kochvorrichtung ein Kochbehälter (11) befindet, und die vorgegebene Anzahl von Heizeinheiten (20) betreibt.

8. Elektrische Kochvorrichtung nach Anspruch 2 oder einem hiervon abhängigen Anspruch, wobei die Heizeinheiten (20) Wärme für einen niedrigeren Teil der Kochplatte (12) bereitstellen und sich unter der Kochplatte (12) in vorgegebenen Intervallen befinden.

9. Elektrische Kochvorrichtung nach Anspruch 3 oder einem hiervon abhängigen Anspruch, die ferner eine Tragplatte (14) umfasst, die sich unter dem wärmeisolierenden Material (15) befindet, wobei um die Tragplatte (14) ein Tragrahmen (16) vorhanden ist, um die Steuereinheit (30) zu tragen, die die Heizeinheiten (20) betreibt.

10. Elektrische Kochvorrichtung nach Anspruch 2 oder einem hiervon abhängigen Anspruch, wobei jede der Heizeinheiten (20) ein Lagenheizelement (21) umfasst, das durch Drucken einer durch Wärme erzeugten Farbe unter der Kochplatte (12) in den unabhängigen Zellen gebildet ist.

11. Elektronische Kochvorrichtung nach einem vorhergehenden Anspruch, wobei die Elektroden (22, 23) jeweils mit einem Ende des Lagenheizelements (21) verbunden sind, um ihm Leistung zuzuführen.

12. Elektrische Kochvorrichtung nach einem vorhergehenden Anspruch, die ferner ein elektrisches Verbindungselement (24) umfasst, wobei jede der Heizeinheiten (20) mit der Steuereinheit (30) über das elektrische Verbindungselement (24) elektrisch verbunden ist.

13. Elektrische Kochvorrichtung nach einem vorhergehenden Anspruch, die ferner eine Tasteneingabeeinheit umfasst, die mehrere Steuerknöpfe (13) besitzt und mit einer Eingangsseite der Steuereinheit (30) elektrisch verbunden ist, um Kochbefehle von einem Anwender zu empfangen.

14. Elektrische Kochvorrichtung nach einem vorhergehenden Anspruch, wobei die Steuereinheit (30) die Heizeinheiten (20) getrennt betreibt.

15. Elektrische Kochvorrichtung nach einem vorhergehenden Anspruch, wobei die Steuereinheit (30) die Heizeinheiten (20) in Gruppen betreibt, indem sie die Leistungszufuhr zu den Elektroden (22, 23) ein- und ausschaltet.

16. Elektrische Kochvorrichtung nach einem vorhergehenden Anspruch, wobei die Steuereinheit (30) einen Ort und eine Größe eines Kochbehälters (11) detektiert, indem sie die Stromänderungsrate für jede der Heizeinheiten (20) berechnet.

17. Elektrische Kochvorrichtung nach einem vorhergehenden Anspruch, wobei die Heizeinheiten (20) zueinander parallel geschaltet sind und mit einer Ausgangsseite der Steuereinheit (30) elektrisch verbunden sind.

18. Elektrische Kochvorrichtung nach Anspruch 2 oder einem hiervon abhängigen Anspruch, wobei die wärmeleitende Kochplatte (12) aus einem Keramikglasmaterial hergestellt ist.

19. Elektrische Kochvorrichtung nach Anspruch 2 oder einem hiervon abhängigen Anspruch, wobei die Steuereinheit (30) dann, wenn der Kochbehälter an eine andere Stelle bewegt wird, die Stelle detektiert und die vorgegebene Anzahl von Heizeinheiten (20), die der detektierten Stelle entsprechen, betreibt.

20. Verfahren zum Steuern einer elektrischen Kochvorrichtung, wobei die elektrische Kochvorrichtung Heizeinheiten (20) umfasst, wobei jede Heizeinheit (20) ein Heizelement (21) und Elektroden (22, 23), die mit dem Heizelement (21) verbunden sind, besitzt, und eine Schalteinheit (42) umfasst, um Leistung, die in die Elektroden (22, 23) eingegeben wird, zu schalten, wobei das Verfahren
**gekennzeichnet ist durch**:
Detektieren von Werten des Stroms, der von den Heizeinheiten (20) ausgegeben wird, nachdem die Heizeinheiten (20) betrieben worden sind; und
Betreiben der vorgegebenen Anzahl von Heizeinheiten (20), die in Übereinstimmung mit den detektierten Stromwerten bestimmt worden sind.

21. Verfahren nach Anspruch 20, das ferner Folgendes umfasst:
Berechnen von Stromänderungsraten der Heizeinheiten (20) in Übereinstimmung mit den detektierten Stromwerten; und
Detektieren, ob sich ein durch die Heizeinheiten (20) zu erwärmender Kochbehälter (11) in der elektrischen Kochvorrichtung befindet, in Übereinstimmung mit den berechneten Stromänderungsraten.

22. Verfahren nach Anspruch 21, wobei:
jene Heizeinheiten (20) bestimmt werden, die Ausgangsstrom-Änderungsraten besitzen, die gleich oder höher als eine im Voraus festgelegte Stromänderungsrate sind; und
die vorgegebene Anzahl von Heizeinheiten (20) betrieben wird.

## Revendications

1. Appareil de cuisson électrique, comprenant:
des unités chauffantes (20), chaque unité chauffante (20) ayant un élément chauffant (21) et des électrodes (22, 23) connectées à l'élément chauffant (21) ;
une unité de commutation (42) pour commuter l'alimentation électrique appliquée aux électrodes (22, 23) ;
**caractérisé en ce qu'**il comprend en outre :
une unité de détection de courant (43) pour détecter des valeurs de courant produites en sortie par les unités chauffantes (20) ; et
une unité de commande (30) pour actionner un nombre prédéterminé des unités chauffantes (20), lequel est déterminé en fonction des valeurs de courant détectées par l'unité de détection de courant (43) après l'actionnement des unités chauffantes (20).

2. Appareil de cuisson électrique selon la revendication 1, comprenant en outre une plaque de cuisson thermiquement conductrice (12), les unités chauffantes (20) étant imprimées dans des cellules indépendantes sous la plaque de cuisson thermiquement conductrice (12) qui permet de placer sur celle-ci un récipient de cuisson (11).

3. Appareil de cuisson électrique selon la revendication 2, comprenant en outre un matériau calorifuge (15) placé sous les unités chauffantes (20).

4. Appareil de cuisson électrique selon la revendication 2 ou 3, dans lequel les unités chauffantes (20) sont imprimées sous toute une surface de la plaque de cuisson (12).

5. Appareil de cuisson électrique selon l'une quelconque des revendications précédentes, dans lequel :
l'unité de commande (30) calcule des vitesses de changement de courant dans les unités chauffantes (20) en fonction des valeurs de courant détectées par l'unité de détection de courant (43).

6. Appareil de cuisson électrique selon la revendication 5, comprenant en outre un microprocesseur pour actionner le nombre prédéterminé d'unités chauffantes (20) déterminé en fonction des vitesses de changement de courant calculées.

7. Appareil de cuisson électrique selon la revendication 6, dans lequel le microprocesseur détermine les unités chauffantes (20) ayant des vitesses de sortie de changement de courant de sortie égales ou supérieures à une vitesse de changement de courant préétablie afin de déterminer si un récipient de cuisson (11) se trouve ou non sur l'appareil de cuisson électrique, et actionne le nombre prédéterminé d'unités chauffantes (20).

8. Appareil de cuisson électrique selon la revendication 2 ou n'importe quelle revendication en dépendant, dans lequel les unités chauffantes (20) chauffent une partie inférieure de la plaque de cuisson (12) et sont situées sous la plaque de cuisson (12) à des intervalles prédéterminés.

9. Appareil de cuisson électrique selon la revendication 3 ou n'importe quelle revendication en dépendant, comprenant en outre une plaque de support (14) située sous le matériau calorifuge (15), un cadre de support (16) étant situé autour de la plaque de support (14) afin de supporter l'unité de commande (30) qui actionne les unités chauffantes (20).

10. Appareil de cuisson électrique selon la revendication 2 ou n'importe quelle revendication en dépendant, dans lequel chacune des unités chauffantes (20) comprend un élément de film chauffant (21) formé par l'impression d'une peinture générée par la chaleur sous la plaque de cuisson (12) dans les cellules indépendantes.

11. Appareil de cuisson électrique selon l'une quelconque des revendications précédentes, dans lequel les électrodes (22, 23) sont connectées à une extrémité de l'élément de film chauffant (21), afin de fournir respectivement une alimentation électrique à celui-ci.

12. Appareil de cuisson électrique selon l'une quelconque des revendications précédentes, comprenant en outre un élément de connexion électrique (24), dans lequel chacune des unités chauffantes (20) est connectée électriquement à l'unité de commande (30) par le biais de l'élément de connexion électrique (24).

13. Appareil de cuisson électrique selon l'une quelconque des revendications précédentes, comprenant en outre une unité de touches de saisie comportant une pluralité de boutons de commande (13) connectée électriquement à un côté de saisie de l'unité de commande (30) afin de recevoir des commandes de cuisson provenant d'un utilisateur.

14. Appareil de cuisson électrique selon l'une quelconque des revendications précédentes, dans lequel l'unité de commande (30) actionne les unités chauffantes (20) séparément.

15. Appareil de cuisson électrique selon l'une quelconque des revendications précédentes, dans lequel l'unité de commande (30) actionne les unités chauffantes (20) en groupes en fournissant et en coupant une alimentation électrique aux électrodes (22, 23).

16. Appareil de cuisson électrique selon l'une quelconque des revendications précédentes, dans lequel l'unité de commande (30) détecte une position et une dimension d'un récipient de cuisson (11) en calculant la vitesse de changement de courant relativement à chacune des unités chauffantes (20).

17. Appareil de cuisson électrique selon l'une quelconque des revendications précédentes, dans lequel les unités chauffantes (20) sont connectées parallèlement les unes aux autres et sont connectées électriquement à un côté de sortie de l'unité de commande (30).

18. Appareil de cuisson électrique selon la revendication 2 ou n'importe quelle revendication en dépendant, dans lequel la plaque de cuisson thermiquement conductrice (12) est réalisée en un matériau de verre céramique.

19. Appareil de cuisson électrique selon la revendication 2 ou n'importe quelle revendication en dépendant, dans lequel quand le récipient de cuisson (11) est déplacé dans une autre position, l'unité de commande (30) détecte cette position et actionne le nombre prédéterminé d'unités chauffantes (20) correspondant à la position détectée.

20. Procédé de commande d'un appareil de cuisson électrique, l'appareil de cuisson électrique comprenant des unités chauffantes (20), chaque unité chauffante (20) ayant un élément chauffant (21) et des électrodes (22, 23) connectées à l'élément chauffant (21), et une unité de commutation (42) pour commuter l'alimentation électrique appliquée aux électrodes (22, 23), le procédé étant **caractérisé par** :
la détection de valeurs de courant produites en sortie par les unités chauffantes (20) après l'actionnement des unités chauffantes (20) ; et
l'actionnement du nombre prédéterminé d'unités chauffantes (20) déterminé en fonction des valeurs de courant détectées.

21. Procédé selon la revendication 20, comprenant en outre :
le calcul des vitesses de changement de courant des unités chauffantes (20) en fonction des valeurs de courant détectées ; et
la détection du fait qu'un récipient de cuisson (11) destiné à être chauffé par les unités chauffantes (20) se trouve ou non dans l'appareil de cuisson électrique en fonction des vitesses de changement de courant calculées.

22. Procédé selon la revendication 21, comprenant :
la détermination des unités chauffantes (20) ayant des vitesses de sortie de changement de courant égales ou supérieures à une vitesse de changement de courant préétablie ; et
l'actionnement du nombre prédéterminé d'unités chauffantes (20).
